# EUROPÄISCHE PATENTSCHRIFT

(11) **EP 0 805 741 B1**
(45) Veröffentlichungstag und Bekanntmachung des Hinweises auf die Patenterteilung: **12.07.2000**
(21) Anmeldenummer: 95918583.6
(22) Anmeldetag: 21.04.1995
(51) Int. Cl.: B29B 9/06, B26D 7/01

(54) **VORRICHTUNG ZUM ABKÜHLEN UND GRANULIEREN VON KUNSTSTOFF-STRÄNGEN**
DEVICE FOR COOLING AND GRANULATING STRANDS OF PLASTIC
DISPOSITIF DE REFROIDISSEMENT ET DE GRANULATION DE JONCS EN MATIERE PLASTIQUE

(30) Priorität: 27.04.1994 DE 4414754
(43) Veröffentlichungstag der Anmeldung: 12.11.1997
(73) Patentinhaber: C.F. SCHEER & CIE. GMBH & CO., D-70435 Stuttgart (DE)
(72) Erfinder: ZOLLITSCH, Ludwig, D-70825 Korntal (DE); KREUZ, Ulrich, D-71729 Erdmannhausen (DE)
(74) Vertreter: Klunker . Schmitt-Nilson . Hirsch
(86) Internationale Anmeldenummer: EP9501513
(87) Internationale Veröffentlichungsnummer: WO9529048

(56) Entgegenhaltungen:
- DE-A- 3 900 250
- FR-A- 2 354 869
- GB-A- 2 271 741
- PATENT ABSTRACTS OF JAPAN vol. 13, no. 6 (M-781) (3354) 9. Januar 1989 & JP,A,63 216 710 (ISHINAKA TEKKOSHO K.K.) 9. September 1988
- PATENT ABSTRACTS OF JAPAN vol. 10, no. 311 (M-528) (2367) 23. Oktober 1986 & JP,A,61 123 504 (ISHINAKA TEKKOSHO K.K.) 11. Juni 1986

## Beschreibung

Die Erfindung betrifft eine Vorrichtung zum Abkühlen und Granulieren von Kunststoff-Strängen, die schmelzflüssig aus Düsen austreten und entweder unmittelbar oder über eine unterhalb der Düsen anordenbare Schurre mit Kühlwasserzuleitung einer nachfolgend angeordneten Ablaufrinne zugeführt werden, die wenigstens eine Vorrichtung zur Erzeugung eines Kühlflüssigkeitsstromes aufweist, wobei die Stränge im Anschluß an die Ablaufrinne in einen Granulator eintreten, der wenigstens eine aus rotierbarem Schermesser und Gegenmesser bestehende Messeranordnung zum Granulieren der Stränge aufweist.

Aus der DE 39 00 250 C2 ist eine Vorrichtung zum Abkühlen, Trocknen und Granulieren von schmelzflüssig aus Düsen austretenden Strängen mit einer mit ihrem aufnahmeseitigen Ende unter den Düsen angeordneten Ablaufrinne bekannt, wobei weiterhin eine Einrichtung vorgesehen ist, die auf der Ablaufrinne einen Kühlflüssigkeitsstrom erzeugt, während der Ablaufrinne ein Granulator nachgeordnet ist und außerdem noch eine vor dem abgabeseitigen Ende in der Ablaufrinne angeordnete Entwässerungsstrecke vorgesehen ist, in der die Ablaufrinne mit Durchlässen für den freien Durchtritt der Kühlflüssigkeit versehen ist.

Darüber hinaus ist bei dieser bekannten Vorrichtung die Ablaufrinne im Bereich nach der Entwässerungsstrecke in ihrem Boden über eine solche Länge und so dicht benachbart mit Eintrittsdüsen für einen Luftstrom versehen, wobei die Stränge gegenüber dem Boden weitgehend reibungsfrei entlang der Ablaufrinne in den an ihrem abgabeseitigen Ende angeordneten Granulator mit einem die sofortige Weiterverarbeitung ermöglichenden Trocknungsgrad geleitet werden. Dieser Granulator weist innerhalb eines entsprechenden Gehäuses im wesentlichen zwei übereinanderliegende Einzugswalzen für die Kunststoffstränge auf, ferner eine Messerwalze, die mit einem entsprechenden Gegenmesser zusammenarbeitet. Mittels dieser Messerwalze und dem Gegenmesser werden die von den Einzugswalzen zugeführten Kunststoffstränge granuliert und das infolgedessen durch den Granulator erzeugte Granulat fällt durch einen Ausfallschacht zur weiteren Verarbeitung heraus.

Je nach Anwendungsfall für solche Vorrichtungen ist es nach einer längeren oder kürzeren Zeit erforderlich, die Verschleißteile, insbesondere die Schneidwerkzeuge auszutauschen, mit der Folge, daß die Vorrichtung stillgelegt werden muß, damit die entsprechenden Wartungs- und Instandsetzungsmaßnahmen durchgeführt werden können.

Hierzu gehört, wie bereits erwähnt, insbesondere das Austauschen der Bauteile der kompletten Messeranordnung, insbesondere des Schermessers und des Gegenmessers, unter Umständen aber auch des gesamten Granulators und gegebenenfalls auch weiterer Baugruppen der Vorrichtung. Derartige Arbeiten zum Austauschen der Verschleißteile des Granulators bzw. des kompletten Granulators sind außerordentlich zeitintensiv und verursachen relativ hohe Kosten, vor allen Dingen deswegen, weil in vielen Fällen zumindest ein vollständiger Granulator pro Vorrichtung bevorratet werden muß, insbesondere in solchen Fällen, in denen aufgrund der Art des Einsatzes der Vorrichtung ein Auswechseln von einzelnen Bauteilen des Granulators aus zeitlichen Gründen völlig ausscheidet.

In diesem Zusammenhang ist insbesondere auch zu berücksichtigen, daß ein Haupteinsatzgebiet für Granulatoren der eingangs geschilderten Art im kontinuierlichen Betrieb liegt, wobei aus verfahrenstechnischen Gründen kontinuierliche Anlagen nicht abgeschaltet werden können, d.h. in solchen Fällen muß der Granuliervorgang praktisch ununterbrochen weiterlaufen.

Darüber hinaus gibt es auch Anwendungsfälle mit diskontinuierlichem Betrieb, aber auch hierbei darf es während des Austragens, d.h. der Granulationszeit, praktisch zu keiner Unterbrechnung kommen, da sonst die Qualität des resultierenden Produktes deutlich verschlechtert würde.

Im übrigen weisen die Granulatoren der bekannten Vorrichtungen noch die weiteren Nachteile auf, daß im Falle einer Blockade der Einzugswalzen durch das Produkt die zu reinigenden Stellen schwer zugänglich sind.

Während des Betriebes der bekannten Vorrichtungen werden die Kunststoffstränge nach dem Eintreten in den Granulator von dem in diesem angeordneten Einzugswalzenpaar gezogen, wobei zu berücksichtigen ist, daß zwischen den Düsen, aus welchen die Stränge schmelzflüssig austreten, und diesem Einzugswalzenpaar des Granulators eine relativ große Distanz vorhanden ist, wodurch sich die Konsequenz ergibt, daß gleichsam zunächst noch schmelzflüssige Kunststoffstränge von kurze Zeit darauf erstarrten Kunststoffsträngen über eine verhältnismäßig große Distanz unkontrolliert gezogen werden. Dies kann, je nach Verwendung der Kunststoffarten, unter Umständen zur Folge haben, daß es zu Verdrehungen oder Aneinanderklebungen der Kunststoffstränge kommt, mit der Folge, daß das resultierende Produkt, d.h. das Granulat ungleichförmig ausfällt.

Mit Rücksicht auf die im vorangehenden geschilderten Gegebenheiten bei bekannten Vorrichtungen liegt der vorliegenden Erfindung die Aufgabe zugrunde, eine verbesserte Vorrichtung der eingangs definierten Art anzugeben, die in der Weise konstruiert ist, daß ein Austauschen des kompletten Granulators in verhältnismäßig einfacher Weise und selbst bei praktisch ununterbrochenem Betrieb der Anlage durchführbar ist.

Diese Aufgabe wird bei einer Vorrichtung der eingangs definierten Art gemäß der Erfindung dadurch gelöst, daß die Ablaufrinne in ihrem dem Granulator zugewendeten Endbereich eine Abzugs-Rollenanordnung zum Abziehen der Stränge von der Ablaufrinne und zum Zuführen der Stränge zu dem als gesonderte Baugruppe ausgebildeten Granulator aufweist.

Als Grundgedanke der Erfindung wird es angesehen, unter Verzicht auf ein Einzugswalzenpaar als zu dem Granulator gehörige Baugruppe nunmehr ein Abzugsrollen-Paar dem Endbereich der Ablaufrinne zuzuordnen, wobei diese Abzugsrollen-Anordnung zum Abziehen der im wesentlichen erstarrten Stränge von der Ablaufrinne dient, so daß im Anschluß an die Abzugsrollen-Anordnung die Stränge in den unmittelbar angrenzenden Eintrittsbereich des als gleichsam separierbare Baugruppe ausgebildeten Granulators eintreten und dort sodann der weiteren Verarbeitung unterworfen werden. Falls die in diesem Granulator enthaltenen Schneidmesser, z.B. Schermesser und Gegenmesser, infolge längeren Gebrauchs unbrauchbar geworden sind, läßt sich der komplette Granulator von der Abzugsrollen-Anordnung der Ablaufrinne entfernen und durch einen frischen Granulator ersetzen. Der Granulator kann auch unmittelbar mit der Abzugsrollen-Anordnung der Ablaufrinne in lösbarer Weise verbunden werden.

Derartige Austauscharbeiten lassen sich insbesondere in kürzester Zeit ausführen.

Gemäß einer vorteilhaften Weiterbildung der Erfindung ist vorgesehen, daß die Ablaufrinne ein die Abzugsrollen-Anordnung enthaltendes Gehäuse aufweist, an welches angrenzend ein weiteres, den Granulator enthaltendes Gehäuse in der Weise angeordnet ist, daß es relativ zum Gehäuse der Abzugsrollen-Anordnung verschiebbar ist, wodurch in besonders einfacher Weise das Entfernen des Granulators von der Ablaufrinne und das Austauschen erfolgen kann.

Das Austauschen des kompletten Granulators kann aber auch so vorgenommen werden, daß der ausgetauschte Granulator mit stumpf gewordenen Messeranordnungen durch Betätigung von entsprechenden, zwischen den beiden Gehäusen angeordneten Schnellkupplungsmitteln gelöst, relativ zur Abzugsrollen-Anordnung verschoben und durch einen neuen Granulator ersetzt wird, der anschließend wiederum mit Hilfe der Schnellkupplungsmittel mit dem Gehäuse der Abzugsrollen-Anordnung verbunden wird.

Infolgedessen kann der Granulator praktisch ohne Unterbrechung des Strangflusses während des Arbeitens der Anlage ausgetauscht werden, was insbesondere im Falle einer kontinuierlich ablaufenden Produktion außerordentlich vorteilhaft ist.

Ein weiterer Vorteil der erfindungsgemäß ausgebildeten Vorrichtung liegt darin, daß die als Kühlrinne dienende Ablaufrinne zusammen mit der ihrem einen Endbereich zugeordneten Abzugsrollen-Anordnung gleichsam als eine Einheit ausgebildet und produziert werden kann.

Ablaufrinne mit Abzugsrollen-Anordnung einerseits und Granulator andererseits lassen sich gleichsam baukastenartig zusammensetzen.

Weitere vorteilhafte Ausgestaltungen der Erfindung ergeben sich aus den Unteransprüchen.

Die Erfindung wird im folgenden anhand von Ausführungsbeispielen näher erläutert, wobei auf die beigefügten Zeichnungen Bezug genommen wird.

Es zeigen:
- **Fig. 1**: eine schematische Seitenansicht eines Granulators nach dem Stand der Technik;
- **Fig. 2**: schematisch eine Seitenansicht einer erfindungsgemäßen Vorrichtung zum Abkühlen und Granulieren von Kunststoff-Strängen in ihrer Betriebsphase; und
- **Fig. 3**: eine weitere Seitenansicht der Vorrichtumg gemäß Fig. 2, wobei nunmehr die Granulator-Baugruppe in einer von der Abzugsrollen-Anordnung der Ablaufrinne separierten Position dargestellt ist.

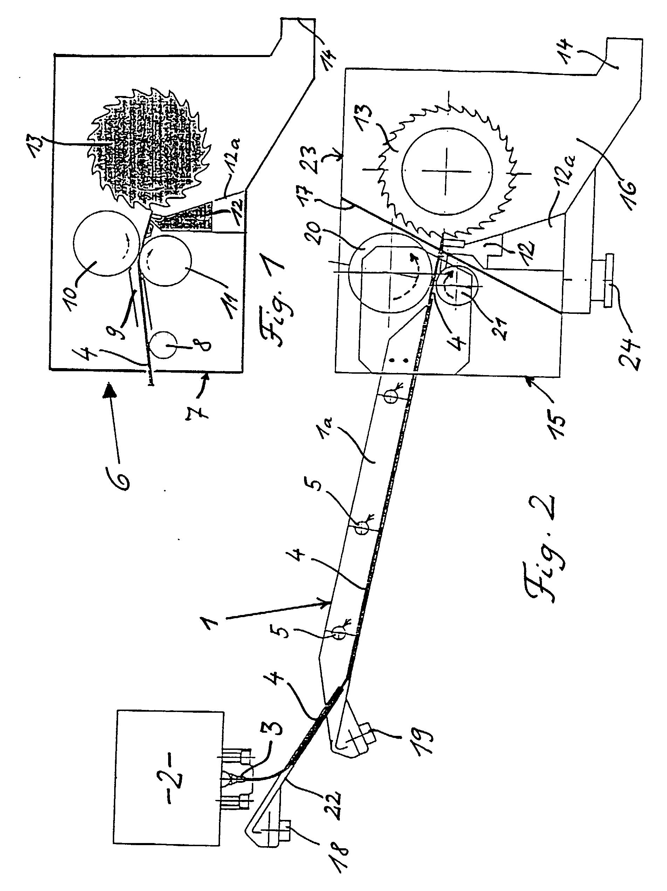

Aus Fig. 1 ist die beispielsweise Ausführung eines Granulators 6 ersichtlich, wie er bei einer Vorrichtung zum Abkühlen und Granulieren von Kunststoff-Strängen nach dem Stand der Technik benutzt wird. Ein solcher Granulator 6 wird im Anschluß an eine (nicht gezeigte) Ablaufrinne angeordnet und weist im wesentlichen ein Gehäuse 7 mit einer Eintrittsöffnung auf, in welche der von der Ablaufrinne herkommende Kunststoff-Strang 4 eingeleitet wird. Im Inneren des Granulator-Gehäuses 7 befinden sich zunächst eine Führungsrolle 8, die den Kunststoff-Strang 4 zu einem Einzugsschacht 9 hin weiterleitet, in welchen der Kunststoff-Strang eintritt und sodann zu dem Spalt zwischen einer oberen Einzugswalze 10 und einer unteren Einzugswalze 11 gelangt. Diese beiden Einzugswalzen 10 und 11 ziehen den Strang 4 aus der Ablaufrinne ab und führen ihn zu einem rotierenden Schermesser 13, das mit einem Amboßmesser 12 zusammenarbeitet, das auf einem Messerhalter 12a angeordnet ist. Mittels dieser Messeranordnung werden die zugeführten Kunststoff-Stränge 4 granuliert, wobei das resultierende Kunststoff-Granulat den Granulator 6 bei einem Auslaß 14 verläßt. Wie aus Fig. 1 ersichtlich ist, besteht ein derartiger bekannter Granulator 6 aus einer Mehrzahl von innerhalb des Gehäuses 7 angeordneten Einzelbauelementen, wobei der komplette Granulator im Anschluß an die Ablaufbzw. Kühlrinne angeordnet ist und unter Umständen sogar mit dieser eine Einheit bildet.

Im Falle, daß die im Granulator enthaltenen Schneidwerkzeuge, wie Schermesser und Amboßmesser, im Laufe der Zeit stumpf und damit unbrauchbar werden, ist es erforderlich, daß dieser komplette Granulator 6 ausgetauscht wird, unter Umständen aber auch sogar die komplette Kühl- bzw. Ablaufrinne und der mit dieser verbundene Granulator.

Derartige Austauscharbeiten sind naturgemäß sehr zeitintensiv und infolgedessen auch äußerst kostspielig.

Aus der Fig. 2 ist eine Vorrichtung zum Abkühlen und Granulieren von Kunststoff-Strängen gemäß der vorliegenden Erfindung ersichtlich, wobei diese Vorrichtung im wesentlichen die folgenden Elemente aufweist:

ein schematisch dargestelltes Düsenpaket 2, dem in einer hier nicht näher dargestellten Art und Weise, welche an sich bekannt ist, thermoplastischer Kunststoff schmelzflüssig zugeführt wird, der sodann aus einer unten angeordneten Düse 3 ausgepresst wird. In der Regel befinden sich mehrere derartige Düsen 3 in einer Reihe nebeneinander unterhalb des Düsenpaketes 2.

Fig. 2 zeigt die Betriebssituation der Vorrichtung. In diesem Falle gelangen die aus den Düsen 3 austretenden Kunststoff-Stränge zunächst auf eine schräg geneigt angeordnete, einleitende Schurre 22, die in ihrem der Ablaufrinne 1 abgewendeten Endbereich mit einer Kühlwasser-Zuführung 18 versehen ist. Der hierdurch der einleitenden Schurre 22 zugeführte Wasserfilm nimmt die Kunststoff-Stränge 4 mit, derart, daß sie entlang der Schurre 22 und über deren in Richtung zur Ablaufrinne 1 hin weisendes Ende hinaus zu dieser Ablaufrinne 1 hin weitergeleitet werden. Diese Ablaufrinne 1 ist ebenfalls in geneigter Anordnung dargestellt, wobei sie an ihrem oberen Ende ebenfalls mit einer Kühlwasserzuführung 19 versehen ist. Die Ablaufrinne 1 leitet die zugeführten Kunststoff-Stränge 4 weiter in Richtung zu der auf der rechten Seite der Fig. 2 dargestellten Anordnung, welche noch weiter unten im einzelnen beschrieben wird. Auf jeden Fall werden im Bereich dieser Ablaufrinne 1 die in paralleler Anordnung gemeinsam nach unten gleitenden Kunststoff-Stränge 4 mit Hilfe des zugeführten Kühlwassers gekühlt, wobei weiterhin die Ablaufrinne 1 mit einer Anzahl von Kühlwasser-Sprühdüsen 5 kombiniert ist, welche zusätzlich Kühlflüssigkeit auf die Stränge 4 sprühen. Derartige Kühlwasser-Sprühdüsen 5 sind beispielsweise im Bereich von seitlichen Gehäusewandungen la der Ablaufrinne 1 angeordnet. Die Ablaufrinne 1 leitet nun die nach und nach erstarrenden Kunststoff-Stränge 4 in Richtung zu ihrem Endbereich hin, welcher einem Granulator 16 zugewendet ist. Zunächst weist jedoch dieser Endbereich der Ablaufrinne 1 ein Gehäuse 15 auf, in welchem eine aus Abzugsrollen bestehende Baugruppe untergebracht ist, nämlich eine obere Abzugsrolle oder -walze 20 sowie eine untere Abzugsrolle bzw. -walze 21, zwischen denen ein Abzugsspalt für die von der Ablaufrinne 1 her kommenden Kunststoff-Stränge 4 gebildet ist. Infolgedessen werden die abgekühlten Kunststoff-Stränge 4 gemeinsam von der Ablaufrinne 1 abgezogen und erreichen sodann den anschließend angeordneten Granulator 16. Dieser Granulator 16 grenzt mit seiner Eintrittsseite unmittelbar an das Gehäuse 15 für die Abzugsrollen-Anordnung 20, 21 an. Das Granulator-Gehäuse ist mit 23 bezeichnet.

Der Granulator 16 besteht im wesentlichen aus einem Schermesser 13 sowie aus einem Amboßmesser 12 (Gegenmesser), welches an einem entsprechenden Messerhalter 12a angebracht ist.

Insbesondere ist bei dieser erfindungsgemäßen Ausführung vorgesehen, daß der Granulator 16 mit seinem Gehäuse 23 in der Weise an das Gehäuse 15 der Abzugsrollen-Anordnung 20, 21 angeschlossen ist, daß das Gehäuse 23 relativ zum Gehäuse 15 in einer oder mehreren Richtungen verschiebbar ist, und zwar zum Zwecke des Verbindens mit oder des Lösens von dem Gehäuse 15 für die Abzugsrollen-Anordnung 20, 21. Hierbei ist insbesondere ein zwischen den Gehäusen 15 und 23 schräg verlaufender Trennbereich 17 vorgesehen, der gleichsam eine gemeinsame Trennebene für die beiden Gehäuse 15 und 23 bildet, so daß im Bedarfsfalle ein verhältnismäßig einfaches Abtrennen oder Entfernen des Granulatorgehäuses 23 von dem Gehäuse 15 für die Abzugsrollen-Anordnung 20, 21 ermöglicht ist. Zum lösbaren Verbinden der beiden Gehäuse 15 und 23 miteinander sind beispielsweise in den Zeichnungen nicht näher dargestellte Schnellkupplungsmittel vorgesehen, die im Bereich zwischen diesen beiden Gehäusen angeordnet sind. Jedenfalls ist es aufgrund der gezeigten Anordnung in einer verhältnismäßig einfachen Weise möglich, den Granulator 16 in Form einer separierbaren Baugruppe auszubilden, deren Austausch im Bedarfsfalle relativ zu den übrigen Baugruppen der Vorrichtung gemäß Fig. 2 in einer praktisch mühelosen Art und Weise möglich ist. Die Darstellungsweise nach Fig. 2 zeigt die Vorrichtung zum Abkühlen und Granulieren von Kunststoff-Strängen in ihrer Betriebsphase, wobei die beiden Gehäuse 15 und 23 dicht aneinander angrenzen, so daß die die beiden Abzugswalzen 20 und 21 verlassenden Kunststoff-Stränge 4 unmittelbar in den Eintrittsbereich des Granulators 16 gelangen und dort weiterverarbeitet werden, bis letztendlich wiederum das resultierende Granulat aus dem Auslaß 14 des Gehäuses 23 austritt.

Das Granulator-Gehäuse 23 weist in seinem unteren Bereich noch eine Kühlwasser-Ablaßvorrichtung 24 auf.

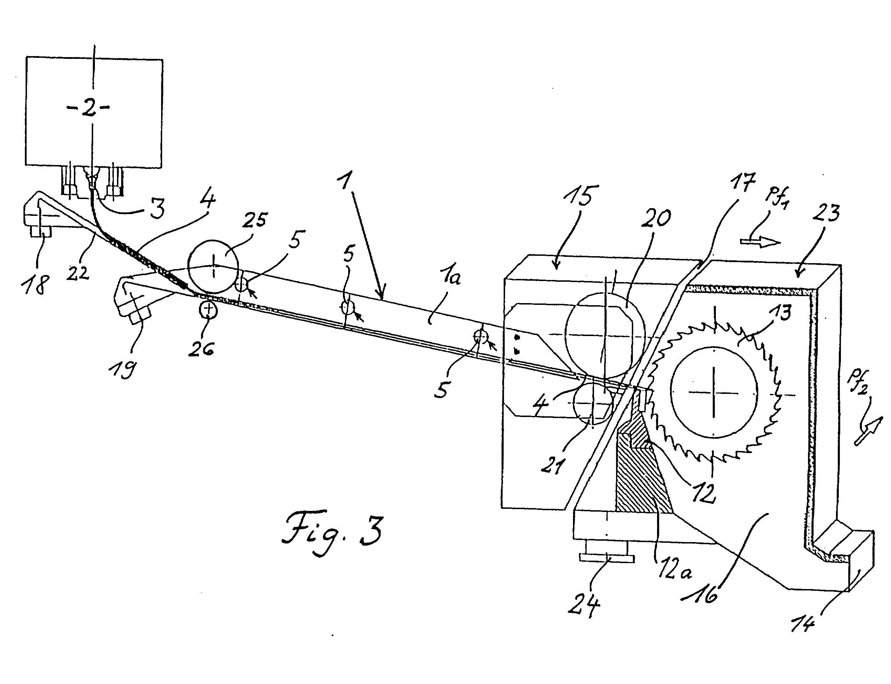

Fig. 3 zeigt die Vorrichtung nach Fig. 2 in einer Betriebsphase, in der die beiden Gehäuse 15 und 23 voneinander getrennt werden, dadurch, daß zunächst das Gehäuse 23 in Richtung des Pfeiles PF₁, d.h. parallel zur Ausrichtung des Gehäuses 15, verschoben wird und im Anschluß daran in Richtung des Pfeiles PF₂ , d.h. senkrecht zu der Richtung gemäß PF₁ verschoben wird.

Es handelt sich hierbei um den Austauschvorgang bezüglich des Granulators 16, und nach der vollständigen Entfernung des unbrauchbar gewordenen Granulates 16 wird in den umgekehrten Bewegungsrichtungen ein neuer Granulator an das Gehäuse 15 für die Abzugsrollen-Anordnung 20, 21 nach Maßgabe des Trennbereiches 17 angesetzt, der vorzugsweise zwischen den beiden Gehäusen 15 und 23 einen schrägen Verlauf besitzt, wie die Fig. 2 und 3 zeigen.

Im übrigen besteht noch die Möglichkeit, wie dies im einzelnen nicht aus den Zeichnungen ersichtlich ist, daß zwischen der Ablaufrinne 1 und dem Gehäuse 15 für die Abzugsrollen-Anordnung 20, 21 lösbare Befestigungsmittel vorgesehen sind.

Aus Fig. 3 ist noch ersichtlich, daß die Ablaufrinne 1 in ihrem der einleitenden Schurre 22 zugeordneten Anfangsbereich, in welchen die noch zu kühlenden Kunststoff-Stränge 4 eingeleitet werden, ebenfalls mit einem Rollen- oder Walzenpaar 25, 26 versehen sein kann, wobei die Kunststoff-Stränge 4 zwischen diesen beiden Rollen 25, 26 geführt werden. Es könnte jedoch auch möglich sein, daß anstelle eines Rollenpaares nur eine einzige Rolle oder Walze 25 benutzt wird. Mit Hilfe einer oder mehrerer Walzen oder Rollen 25, 26 im oberen Bereich der Ablaufrinne 1 läßt sich in bestimmten Fällen die Qualität der zugeführten Kunststoff-Stränge noch verbessern, und zwar dadurch, daß auf diese Stränge durch die Walzen- oder Rollenpaare 25, 26 ein Zug ausgeübt wird, der in relativer Nähe zur Düse 3 erfolgt, so daß insbesondere Strangverdrehungen vermieden und der weitere Transport in Richtung zur Ablaufrinne 1 und weiterhin Richtung zum Granulator 16 verbessert werden kann.

Im übrigen ist noch zu erwähnen, daß die in den Fig. 2 und 3 dargestellte Ablaufrinne 1 der erfindungsgemäßen Vorrichtung zum Abkühlen und Granulieren von Kunststoff-Strängen gleichsam in einer ununterbrochenen Ausführung bis zu der Abzugsrollen- bzw. Abzugswalzen-Anordnung mit oberer Abzugswalze 20 und unterer Abzugswalze 21 geführt werden kann, wobei diese Abzugsrollen-Anordnung in dem unteren, dem Granulator 16 zugewendeten Endbereich der Ablaufrinne 1 angeordnet ist und mit dieser fest verbunden sein kann, d.h. praktisch eine Einheit mit der Ablaufrinne 1 bildet. Im Falle einer Blockade der Rollen oder Walzen 20, 21 sind diese leicht zugänglich und können daher leicht gereinigt werden.

Es ist schließlich noch darauf hinzuweisen, daß bei der im vorangehenden beschriebenen Ausführung der Vorrichtung zum Abkühlen und Granulieren von Kunststoff-Strängen in der Anfahrposition die einleitende Schurre 22 durch eine ableitende Schurre ersetzt wird, was in den Zeichnungen im einzelnen nicht dargestellt ist, oder aber, in einer solchen Anfahrposition ist die einleitende Schurre 22 in einer Richtung z. B. senkrecht zur Papierebene verschoben worden, so daß die aus den Düsen 3 heraustretenden schmelzflüssigen Kunststoff-Stränge zunächst nicht zur Ablaufrinne 1 gelangen, sondern senkrecht nach unten in einem entsprechend angeordneten Auffangbehälter fallen können.

Wird sodann die einleitende Schurre 22 in ihre Betriebsposition verschoben, wie in Fig. 2 und 3 gezeigt, dann erfolgt die Einleitung der Stränge 4 in Richtung zur Ablaufrinne 1. Anstelle einer schräg geneigt angeordneten Ablaufrinne gemäß Fig. 2, könnte die Vorrichtung nach dieser Erfindung aber auch eine horizontal oder vertikal ausgerichtete Ablaufrinne aufweisen.

## Patentansprüche

1. Vorrichtung zum Abkühlen und Granulieren von Kunststoff-Strängen, die schmelzflüssig aus Düsen (3) austreten und entweder unmittelbar oder über eine unterhalb den Düsen anordenbare Schurre (22) mit Kühlwasserzuleitung einer nachfolgend angeordneten Ablaufrinne (1) zugeführt werden, die wenigstens eine Vorrichtung zur Erzeugung eines Kühlflüssigkeitsstromes aufweist, wobei die Stränge (4) im Anschluß an die Ablaufrinne (1) in einen Granulator (16) eintreten, der wenigstens eine aus rotierbarem Schermesser und Gegenmesser bestehende Messeranordnung zum Granulieren der Stränge aufweist, und wobei die Vorrichtung eine Abzugsrollen-Anordnung (20, 21) zum Abziehen der Stränge (4) von der Ablaufrinne (1) aufweist,
**dadurch gekennzeichnet**,
daß die Abzugsrollen-Anordnung in der Ablaufrinne (1) in ihrem dem Granulator (16) zugewendeten Endbereich angeordnet ist und daß der mit seinem Eintrittsbereich an die Abzugsrollen-Anordnung (20, 21) angrenzende Granulator (16) in lösbarer Weise mit der Abzugsrollen-Anordnung (20, 21) verbunden ist.

2. Vorrichtung nach Anspruch 1,
**dadurch gekennzeichnet**,
daß die Ablaufrinne (1) ein die Abzugsrollen-Anordnung (20, 21) enthaltendes Gehäuse (15) aufweist, an das ein weiteres, den Granulator (16) enthaltendes Gehäuse (23) in der Weise angeschlossen ist, daß es relativ zum Gehäuse (15) der Abzugsrollen-Anordnung (20, 21) verschiebbar ist.

3. Vorrichtung nach Anspruch 1 oder 2,
**dadurch gekennzeichnet**,
daß im Bereich zwischen dem Gehäuse (15) der Abzugsrollen-Anordnung (20, 21) und dem Gehäuse (23) des Granulators (16) Schnellkupplungsmittel zum lösbaren Verbinden der beiden Gehäuse (15 und 23) angeordnet sind.

4. Vorrichtung nach einem der Ansprüche 1 bis 3,
**dadurch gekennzeichnet**,
daß zwischen den Gehäusen (15) der Abzugsrollen-Anordnung (20, 21) und dem Gehäuse (23) des Granulators (16) ein schräg verlaufender Trennbereich (17) vorgesehen ist.

5. Vorrichtung nach einem der Ansprüche 1 bis 4,
**dadurch gekennzeichnet**,
daß zwischen der Ablaufrinne (1) und dem Gehäuse (15) der Abzugsrollen-Anordnung (20, 21) lösbare Befestigungsmittel vorgesehen sind.

6. Vorrichtung nach einem der vorhergehenden Ansprüche,
**dadurch gekennzeichnet**,
daß die Abzugsrollen-Anordnung eine obere Abzugsrolle (20) und eine untere Abzugsrolle (21) aufweist, zwischen welchen die Stränge (4) abgezogen werden, welche anschließend in das Gehäuse (23) des Granulators (16) eintreten.

## Claims

1. An apparatus for cooling and granulating plastic strands which emerge from nozzles (3) in molten form and are fed, either directly or via a chute (22) with a cooling water pipe to be disposed below the nozzles, to a following discharge channel (1) having at least an apparatus for producing a coolant stream, the strands (4) entering after the discharge channel (1) into a granulator (16) having at least a knife assembly consisting of a rotatable shearing knife and counterknife for granulating the strands, and the apparatus having a draw-off roll assembly (20, 21) for drawing the strands (4) off the discharge channel (1), **characterized** in that the draw-off roll assembly is disposed in the discharge channel (1) in the end area thereof facing the granulator (16), and the granulator (16) with the inlet area thereof adjacent the draw-off roll assembly (20, 21) is connected detachably with the draw-off roll assembly (20, 21).

2. The apparatus of claim 1, characterized in that the discharge channel (1) has a housing (15) containing the draw-off roll assembly (20, 21), a further housing (23) containing the granulator (16) being connected to said housing (15) of the draw-off roll assembly (20, 21) in such a way as to be displaceable relative to said housing (15).

3. The apparatus of claim 1 or 2, characterized in that quick coupling means are disposed in the area between the housing (15) of the draw-off roll assembly (20, 21) and the housing (23) of the granulator (16) for detachably connecting said two housings (15 and 23).

4. The apparatus of any of claims 1 to 3, characterized in that a slanted separating area (17) is provided between the housing (15) of the draw-off roll assembly (20, 21) and the housing (23) of the granulator (16).

5. The apparatus of any of claims 1 to 4, characterized in that detachable fastening means are provided between the discharge channel (1) and the housing (15) of the draw-off roll assembly (20, 21).

6. The apparatus of any of the above claims, characterized in that the draw-off roll assembly has an upper draw-off roll (20) and a lower draw-off roll (21) between which the strands (4) are drawn off, said strands then entering the housing (23) of the granulator (16).

## Revendications

1. Dispositif de refroidissement et de granulation de joncs en matière plastique, sortant, à l'état liquide de fusion, depuis des buses (3) et amenés, soit directement, soit par l'intermédiaire d'une goulotte (22) susceptible d'être disposée au-dessous des buses, avec fourniture d'eau de refroidissement, vers une goulotte d'évacuation (1) disposée en aval, présentant au moins un dispositif pour générer un flux de liquide de refroidissement, les joncs (4) pénétrant, après être passés dans la goulotte d'évacuation (1), dans un granulateur (16) présentant au moins un dispositif à laines, composé de lames de cisaillement rotatives et de contre-lames pour granuler les joncs, et le dispositif présentant un dispositif à rouleaux d'extraction (20, 21) en vue d'étirer les joncs (4) depuis la goulotte d'évacuation (1), caractérisé en ce que le dispositif à rouleaux d'extraction est disposé dans la goulotte d'évacuation (1), dans sa zone d'extrémité tournée vers le granulateur (16), et en ce que le granulateur (16), limitrophe, par sa zone d'entrée, au dispositif à rouleaux d'extraction (20, 21), est relié de façon désolidarisable au dispositif à rouleaux d'extraction (20,21).

2. Dispositif selon la revendication 1, caractérisé en ce que la goulotte d'extraction (1) présente un carter (15) contenant le dispositif à rouleaux d'extraclion (20, 21), carter auquel est raccordé un autre carter (23), contenant le granulateur (16), de manière à ce qu'il soit déplaçable par rapport au carter (15) du dispositif à rouleaux d'extraction (20, 21).

3. Dispositif selon la revendication 1 ou 2, caractérisé en ce que des moyens de raccordement rapides, conçus pour relier de façon désolidarisable les deux carters (15 et 23), sont disposés dans la zone située entre le carter (15) du dispositif à rouleaux d'extraction (20, 21) et le carter (23) du granulateur (16).

4. Dispositif selon l'une des revendications 1 à 3. caractérisé en ce qu'une zone de séparation (17) s'étendant obliquement est prévue entre le carter (15) du dispositif à rouleaux d'extraction (20, 21) et le carter (23) du granulateur (16).

5. Dispositif selon l'une des revendications 1 à 4, caractérisé en ce que des moyens de fixation désolidarisables sont prévus entre la goulotte d'évacuation (1) et le carter (15) du dispositifà à rouleaux d'extraction (20, 21).

6. Dispositif selon l'une des revendications précédentes, caractérisé en ce que le dispositif à rouleaux d'extraction présente un rouleau d'extraction supérieur (20) et un rouleau d'extraction inférieur (21), rouleaux entre lesquels les joncs (4) sont extraits, en pénétrant ensuite dans le carter (23) du granulateur (16).
